# EUROPEAN PATENT SPECIFICATION

(11) **EP 4 204 150 B1**
(45) Date of publication and mention of the grant of the patent: **14.10.2026**
(21) Application number: 21758718.7
(22) Date of filing: 27.08.2021
(51) Int. Cl.: B01L 3/00, G01N 15/06, G01N 27/74, G01N 35/00, G01N 15/01, G01N 15/02

(54) **IN-SITU CONTROLLED DISSOLUTION OF METALS USING ELECTROCHEMISTRY**
IN-SITU-GESTEUERTE AUFLÖSUNG VON METALLEN MITTELS ELECTROCHEMIE
DISSOLUTION CONTRÔLÉE IN SITU DE MÉTAUX PAR ÉLECTROCHIMIE

(30) Priority: 28.08.2020 EP 20193267
(43) Date of publication of application: 05.07.2023
(73) Proprietor: ETH Zurich, 8092 Zurich (CH)
(72) Inventor: VÖRÖS, Janos, 8050 Zurich (CH); TANNO, Alexander, 8800 Thalwil (CH); TIEFENAUER, Raphael, 8037 Zürich (CH); BLICKENSTORFER, Yves, 8800 Thalwil (CH)
(74) Representative: Frei Patent Attorneys
(86) International application number: PCT/EP2021/073701
(87) International publication number: WO 2022/043477

(56) References cited:
- EP-A1- 2 458 383
- WO-A1-2015/102937
- US-A- 4 557 759
- US-A1- 2006 228 814
- US-A1- 2011 171 749

## Description

### FIELD OF THE INVENTION

The invention is in the field of dissolution of metals suitable for biosensing applications. The invention refers to devices and methods to dissolve metallic particles using halide biochemistry allowing in-situ control and being suitable for analyte detection and quantification.

### BACKGROUND OF THE INVENTION

The invention comprises a new way to degrade metals with an electrochemically controlled reaction without directly connecting it to an electrical circuit. Traditional ways to degrade metals include the degradation in solution by directly applying a potential/current and thus directly driving an electrochemical dissolution reaction. Alternatively, metals can be degraded by adding an etching solution like acids or KI/I₂ solutions. The present invention enables the degradation of metals that are not directly connected or connectable by an electric potential and without adding an etching solution directly. Instead the metals are degraded by locally generating active etching molecules from inactive and therefore non-etching precursor molecules. This approach allows an electrically controlled etching (controlled etching start, etching stop and etching rate) of metals that are not or cannot be directly electrically connected. For example, metal particles that are immobilized on a non-conductive substrate or metal particles that are free floating in solution. The herein described technology thus allows to dissolve such metal particles without the need of a rinsing step or toxic substances. Furthermore, the technology facilitates the detection of analytes in bioassays.

### SUMMARY OF THE INVENTION

Herein described is a method for the electrochemically controlled degradation of metals comprising the following steps:
- A) Providing a piece of a metal or a metal particle free floating or adsorbed on or in a substrate
- B) Contacting the metal with a solution containing an inactive precursor
- C) Applying an electrochemical potential to the solution containing the inactive precursor and thereby generating a solution that degrades the metal.

The invention comprises a method and a system that is used to degrade gold nanoparticles conjugated to a biomolecule. The term "piece of a metal or a metal particle" refers to each piece of a metal or metal alloy. The present invention is suitable for degradation of gold.

The method of the present invention is defined in claim 1. The system of the invention is defined in claim 4.

Suitable metal particles are colloidal gold nanoparticles Preferred are gold nanoparticles that can be used as a label in bioassays. In one embodiment the metal particles are colloidal particles. Therefore, it should be detectable at very low concentrations and it should retain its properties upon conjugation with biorecognition molecules.

In step B) the metal is contacted by a solution that contains an inactive precursor. These solutions are not degrading the metal, so the initial etching speed is zero. The inactive precursor is a molecule being not able to degrade or etch a metal which may be converted (transformed) into an active substance or molecule being able to degrade or etch a metal. According to the present invention the inactive precursor is iodide (I⁻). The solution may also contain a mixture of iodide and one or more different halide ions. The iodide, are typically added by dissolving an iodide salt in the solution. The iodide salt may be selected from the group comprising: KI, NaI, LiI, HI, RbI, CsI, CuI, AgI, AuI, AtI, IBr, ICI, or TiI. The inactive precursor may be present or used in an amount sufficient to degrade the total amount of gold used. A suitable concentration depends on different features such as volume, size of the electrodes, and amount of metal to be degraded. The amount of the inactive precursor may be in the range of 1 micro M to 1M, preferably 0.1 to 100 mM, preferably from 0.5 to 50 mM and eve more preferred from 1 to 20 mM.

Contacting the metal with a solution containing an inactive precursor may be implemented by deposition of dried inactive precursor molecules on a substrate. In another embodiment the inactive precursor may be adsorbed on a separate substrate. In a second sub step, the dried inactive precursor is dissolved. The precursor may be dissolved by pipetting a solvent to the set-up of the method. Suitable solvents are water (H₂O) or water-based solutions (such as buffer solutions, salt solutions, acidic, or basic solutions, organic solvent containing solutions, oil containing emulsions, or hydrogels). The inactive precursor may also be solved by a fluidic sample (saliva, blood, urine, tear fluid, sweat, environmental sample, milk, etc.) containing an analyte to be detected. It may be that the added solvent or sample transports the inactive precursor and/or its active products and/or the metal particles to the location where the metal is to be dissolved. Alternatively, a solution containing the inactive precursor may be introduced by pipetting or microfluidic injection.

To apply an electrochemical potential to the solution containing the inactive precursor at least two electrodes are brought in contact with the solution and a sufficient overpotential to the electrodes is applied. This can be done by either attaching or turning on an external electric power source connected to the electrodes or by additionally adding electrochemical reactions creating the necessary over potential. Therefore, one embodiment of the present invention refers to a method, wherein at least two electrodes are used for the application of an electrochemical potential for electrochemical generation of a solution that degrades metals. These electrodes may be a working electrode and a counter electrode.

Preferred are embodiments with further electrodes such as a reference electrode. Preferred are also embodiments where several working electrodes or sets of working and counter electrodes are used. Different working electrodes may be used as degradation electrode (a first working electrode) or detection electrode (a second working electrode). Electrode sets may be arranged to allow a multidetection assay allowing multiplexed detection. Therefore, the device according to the invention may comprise at least five electrodes, at least two pairs of electrodes for the application of an electrochemical potential for the electrochemical generation of a solution that degrades metals and one electrode being a reference or control electrode. The device may also comprise multiple (more than 2, preferably more than 10) sets of electrodes, wherein each set comprises at least a counter electrode, a reference electrode, a dissolution electrode and a detection electrode. Said set may also include two counter electrodes, two reference electrodes, two dissolution electrodes and one detection electrode.

Thus, the present invention refers to a method wherein the gold nanoparticles are initially not directly electrically connected to an electrochemical circuit. The degradation of the metal is started and controlled by electrochemical generation of active degradation or etching molecules. That means the method allows an electrochemically controlled degradation of gold nanoparticles as an in-situ controlled reaction.

The term "generating a solution that degrades the metal" refers to the conversion of the inactive precursor molecules to molecules within the solution being able to degrade, etch or dissolve the gold nanoparticles. This conversion or reaction is driven by an electrochemical reaction on the electrode leading to the creation of an active metal dissolution solution.

According to the present invention, the electrochemical reaction on the electrodes converts iodide into iodine and triiodide to perform the degradation of the gold nanoparticles. This local generation of an active metal degradation solution allows an electrochemically controlled etching of the metal, even if the metal is not directly contacted by an external overpotential. The degradation kinetics can additionally be controlled by the use of different concentrations of iodide in the solution. Additionally, the amount of active metal degrading molecules can be precisely electrochemically controlled, by an externally applied power source. Larger overpotential and overpotentials that are applied for a longer time period are producing larger amounts of active metal degradation molecules leading to the faster degradation of gold nanoparticles (etching speed) and to the degradation of gold further away from the electrode (etching location). Furthermore, the electrode materials can be used as an element of control as the reaction rate can vary orders magnitude for different material. The desired metal degradation parameters in place, kinetics and amount can thus be achieved by using the appropriate concentration of active metal degradation molecules, such as iodide and by applying the appropriate external power function including but not limited to constant potentials or currents, potential or current steps, potential or current ramps, pulsed potential or current or combinations thereof appropriate to the electrode material.

An appropriate anodic potential for a single indium tin oxide working electrode and a Iodide precursor may be of 0.5 to 2 Volts (with respect to a Carbon reference electrode) for 0.1 to 60 Seconds at 1 to 50 mM KI. The process may be controlled more precisely by controlling multiple electrodes at different potential and/or of different materials. This allows to avoid an overproduction of certain chemical products, such as Iodine which could lead to a depletion of the dissolution chemistry, by driving a cathodic reaction at a second electrode. An appropriate combination of two electrodes are Indium Tin Oxide at -1.1 V and carbon at +0.5 V (with respect to a carbon reference electrode) for 10 to 2000s at 1 to 20 mM KI. In addition, such a setup has the advantage of allowing simultaneous dissolution and deposition of the metal. In some application deposition may be useful for detection of the metal.

The gold degraded by this method or device is subsequently be detected by anodic stripping voltammetry.

The method of the present invention is used for the electrochemical quantification of the amount of gold contained in gold nanoparticles. Such results can be used to quantify either the size or the number of gold nanoparticles. Applications for the quantification of gold nanoparticles are molecular sensing methods or devices where the molecules are quantified by coupling to gold nanoparticles followed by the quantification of the gold nanoparticles using the described method or device.

The described method is especially suitable for detection of an analyte within biosensing applications. It may be used as detection and/or quantification method in assays using biomolecular reporter molecules to detect an analyte. Therefore, the method of the invention may be used in connection with immunoassays such as lateral flow assays (LFA), one-pot assays and general as detection method in microfluidic assays. In general, the method of the present invention may be used for the detection and/or quantification of an analyte in solution. The analyte may be any kind of molecules like peptides, polypeptides, proteins, lipids, polysaccharides, polynucleotides, metabolites, hormones, toxins or drug molecules.

The analyte may be present in any kind of sample. A major part of biosensor applications lies in clinical analysis. It includes detection of a variety of clinical analytes in whole blood, blood serum, saliva, sweat, tears, plasma, urine, cells, tissues and other biological samples. Further suitable samples are: water, fuel, food, drink, and extracts from plants.

To be able to detect and/or quantify an analyte the gold nanoparticle is conjugated directly or indirectly to a molecule able to bind the analyte. The biosensor applications may be based on the principle of sandwich assays (generally used for larger analytes) or competitive assay (generally used for small analytes). The biosensor applications may further be designed as multiplex assays. The biosensor applications may be used to simultaneously detect the presence of multiple analytes in a single experiment. The number of analytes measured within one assay can be >3 and more preferably >10 or even >100.

The steps of a bioassay have to be carried out under conditions suitable to allow binding between the molecules involved. These conditions are known to a person skilled in the art and refer for example to temperature, time, pH value. One condition is that the molecules involved should not change their structure (e.g. proteins should not denature).

Consequently, the method of the present invention comprises degradation of gold nanoparticles being conjugated to a biomolecule. The biomolecule may be a protein, polypeptide, oligopeptide, an aptamer, a polynucleotide, a polycarbohydrate such as an oligosaccharide, or a lipid. The biomolecule may be any molecule having the ability to recognize and bind a specific analyte. Examples are receptors, ligands, peptides, polypeptides, proteins, polysaccharides, polynucleotides, antibodies, and antibody fragments. Suitable antibody fragments are: a Fab fragment, a Fab' fragment, a F(ab')2 fragment, a Fd fragment, a Fd' fragment, a Fv fragment, a dAb fragment, a scFv (single chain) fragment, an isolated CDR region, a dsFv diabody, a single chain antibody, and combinations thereof. Protocols for labeling metal particles for example protocols based on NHS-ester modification are well known within the field.

For immunoassays it may be suitable that the gold nanoparticle and/or the inactive precursor is adsorbed to or in a substrate. It is thereby preferred that the substrate is a non-conductive substrate. The substrate may be a glass plate, a plastic plate such as a multiwell plate (microtiter plate), a micro fluidic channel wall, a porous three-dimensional substrate (e.g. paper, nitrocellulose membrane or glass fiber membrane) or an electrode with a non-conductive coating. The substrate may be capable of liquid transport.

Using the method of the present invention it is possible to quantify an analyte within a sample. To be able to quantify an analyte, one has to quantify the amount of degraded gold. The present invention contains therefore an additional step:
D) Detecting and/or Quantifying electrically or electrochemically the degraded gold.

Detection of the dissolved gold is performed using the same or different electrodes as were used for driving the degradation reaction. Anodic stripping voltammetry, is used for quantification of the degraded gold.

The step "Quantifying electrically or electrochemically the degraded gold" comprise plating the degraded metal (metal ions) to an electrode, such as a plating electrode or a detection electrode, by application of a plating potential and subsequently dissolution of the plated metal. The subsequent dissolution of the plated gold generates an electric current proportional to the amount of plated gold and thus proportional to the amount of analyte present in the sample. The metal plating may be performed during or after the application of the degradation triggering potential.

One aspect of the invention refers to a bioassay according to independent claim 1.

The present invention may also comprise at least one washing step, where unbound analyte molecules and or unbound gold nanoparticles are washed away. In addition, it may be suitable to block unspecific binding to different components of the assay such as metal particles. A person known in the art knows or is able to determine when such washing or blocking steps are needed.

A preferred assay to implement a method of the present invention is a lateral flow assay. Lateral flow assays are a subset of assays combining various reagents and process steps in one assay strip, thus providing a sensitive and rapid means for the detection of analytes. In a lateral flow assay, the inactive precursor may be added dried to the conjugation pad or an additional, separate pad.

In a general method, a liquid sample suspected of containing the analyte is applied to a porous carrier which can consist of an arrangement of several components. More specific: it is introduced to a designated area in the sampling-end (also referred as the "proximal end") of the porous carrier, for a measured time e.g. 5 seconds or in a measured volume e.g. 2 drops. Subsequently, the liquid sample migrates within the porous carrier to the direction of the dry end (also referred as the "distal end"). While migrating in the porous carrier, the sample mobilizes metal particles acting as a label that have been reversibly (temporarily) immobilized in the porous carrier. Alternatively, the gold nanoparticles can be added together with the sample solution. While analyte is interacting with the conjugated gold nanoparticles, the liquid sample and mobilized gold nanoparticles migrates further within the porous carrier to the detection zone, where a reagent that binds the same analyte is fixed or immobilized, usually in the form of a line (may also be a dot). When analyte is present in the liquid sample, a "sandwich" in the form of the mobilized metal particle:analyte:immobilized reagent is formed, and the resulting concentration of the gold nanoparticle may lead to a visible line appearing in the detection zone, which is indicative of a positive result. The gold nanoparticles and therefore the analyte are quantified with anodic stripping voltammetry on an indium tin oxide working electrode.

Therefore, the iodide is also dissolved by the sample fluid and transported along to the detection zone. To quantify the adsorbed gold nanoparticles, the particles are first dissolved followed by the detection of the dissolved gold molecules by using the same or different electrodes via anodic stripping voltammetry.

After the detection zone there might be a control zone, where another reagent is immobilized. This reagent directly binds to the conjugated particles. It serves as a control if the test was carried out properly. The control can be analyzed optically.

A second aspect of the invention refers to systems according to independent claim 4. Therefore, one embodiment of the invention refers to a system comprising a device for the electrochemically controlled degradation of gold nanoparticles comprising at least two electrodes, including a working electrode made of indium tin oxide and a kit for the electrochemically controlled degradation of gold nanoparticles.

In addition, all aspects disclosed in connection with the method above should also apply to the device. The device may further comprise a power supply and conductors to the electrodes. In addition, it is preferred that the device further comprises a reference electrode. Thus, one embodiment of the device comprises three electrodes. Two electrodes for the application of an electrochemical potential for the electrochemical generation of a solution that degrades metals and one electrode being a reference electrode.

The gold nanoparticles may be adsorbed on or in a substrate and wherein the substrate is a non-conductive substrate or a conductive substrate with a non-conductive coating. The device may comprise a housing and/or backing containing the substrate as well as the electrodes. A suggested example for the device is the use of a three-electrode setup with a working, counter and reference electrode. The working electrode is made of indium tin oxide. The counter electrode may be made of any conductive material or combination of conductive materials like carbon, graphene, carbon nanotubes, gold, silver, sliver-chloride, platinum, boron doped diamond, mercury drop, bismuth or indium tin oxide. The reference electrode may be made of any conductive material or combination of conductive materials like carbon, graphene, carbon nanotubes, gold, silver, sliver-chloride, platinum, boron doped diamond, bismuth, mercury drop or indium tin oxide

Another embodiment of the invention refers to a device containing at least one or a first pair of electrodes for detection of the dissolved metal and a second pair of electrodes used for application of an electrochemical potential for the electrochemical generation of a solution that degrades metals. For the purpose of quickly degrading gold nanoparticles and accurately measuring the dissolved amount of gold using the described method or device it is not necessary but beneficial to use an electrode setup with more than two electrodes including more than one working electrodes. One (subset of) working electrode(s) may be used for generating the dissolution chemistry, while an-other (subset of) working electrode(s) may be used for the detection of the dissolved gold and may or may not be involved in the generation of the dissolution chemistry.

The device is suitable for the quantification of an analyte in solution. Therefore, the device may be designed with a typical setup for bioassays such as a lateral flow assay. The device may be a single assay chamber allowing a so called one-pot-assay.

The most accurate quantification of the dissolved gold may be realized by using micro- or nanosized detection working electrode(s). For the maximization of the signal-to- noise ratio the best results can be obtained by using multiple micro- or nanosized detection working electrodes arranged and connected to maximize the amount of captured degraded metal during the plating and at the same time minimizing occurring background currents.

In an embodiment, the dynamic range can be increased with multiple detection areas configured for a different analyte concentration range. Each area is a reporter for a different agent concentration range, such that the total dynamic range of the assay or device is increased, as it is a combination of the individual concentration ranges. This effect can be achieved by multiple detection areas with constant or varying concentrations of analyte binding molecules. Alternatively, the electrochemical degradation time of the gold nanoparticles can be varied for the different areas, from short to long. This can enable a large dynamic range but also support fast test results in the case where the long degradation time is not required. A third approach is to apply different concentrations of the iodide at the different detection areas. This can be achieved by multiplexing in separate isolated channels. Therefore, one embodiment refers to a system containing a device including multiple detection areas, which may be configured differently for example such that the dynamic range of each area is in a different concentration range to increase the combined total dynamic range of the device or to improve the quantification accuracy. It is also possible to quantify several different analytes. Therefore, one embodiment refers to a device of the invention suitable for multiplexed detection of different analytes. Multiplexed measurements can be performed after each other both in time or location or next to each other or stacked on top of each other, or by using different metals or different electrodes.

The device can use at least one reference area. Either a positive or a negative control reference or combinations thereof by using electrochemical or optical readout methods or one or multiple electrochemical references such as additionally deployed electroactive species.

The kit for the electrochemically controlled degradation of gold nanoparticles comprises:
- at least two electrodes
- a gold nanoparticle, conjugated to a biomolecule as defined above
- iodide which may be in solution

These kits may further contain a solution for solving the iodide, a molecule binding the analyte, blocking buffer, control or standard reagents. A kit in molecular biology or in medical diagnostics is a package which includes all necessary ingredients for performing a certain method or singular step. Standard chemicals as present in any standard molecular biology, chemical or medical laboratory are normally not included. Nevertheless, some of these standard chemicals may be indispensable to carry out the inventive assay or the method properly. It is understood that all ingredients are provided in quantities that allow for a proper execution of the desired reactions for the majority of scientific, diagnostic and industrial applications.

Often, but not always, these ingredients are provided in already prepared solutions ready- or close to ready-for-use. There may be also combinations of different ingredients already added together. A further advantage is that such kits use to be verified. Therefore, the operator doesn't have to prove again the viability of the diagnostic method and can save an at least some control experiments. Therefore, kits are a very popular tool in laboratories in research, diagnostics and industry.

### BRIEF DESCRIPTION OF THE DRAWINGS

- Figure 1: shows a schematic overview of a part of the method according to the invention and a device for the method.
- Figure 2: shows a schematic overview of a method according to the present invention suitable for detection of an analyte and an assay chamber for the detection and quantification of analytes.
- Figure 3: shows a schematic overview (top view) of a device suitable to perform a method according to the present invention arranged as lateral flow assay.
- Figure 4: shows a schematic overview (side view) of a device suitable to perform a method according to the present invention arranged as lateral flow assay.
- Figure 5: shows a top view of an alternative electrode design for the device shown in Figure 3.
- Figure 6: shows a top view of another alternative electrode design for the device shown in Figure 3.
- Figure 7: shows a top view of alternative designs for the membrane shape of the device shown in Figure 3.
- Figure 8: shows an exemplary design of an assay suitable comprising multiple detection areas configuring for a different target concentration range.
- Figure 9: shows the device used to acquire the measurements shown in Figures 10 to 14.
- Figure 10: shows light microscopy images of gold nanoparticles on a transparent indium tin oxide electrode insulated by a layer of bovine serum albumin showing the successful etching of the electrically insulated particles.
- Figure 11: shows in a plot experimental results of the setup as in Figure 9. The particle scattering intensity is plotted against time with applied potential cycles with and without potassium iodide in solution.
- Figure 12: shows in a plot experimental results of the setup as in Figure 9, with a constant potential applied and varying amount of potassium iodide.
- Figure 13: shows in a plot experimental results of the setup as in Figure 9, with a constant amount of potassium iodide and varying applied potential.
- Figure 14: illustrates a proof-of-concept experimental device for biosensing applications of the method according to the invention that was used to acquire the experimental measurements shown in Figure 15.
- Figure 15: shows in a plot experimental results of the setup as in Figure 14, with the quantitative readout current after the dissolution of varying amounts of gold particles.

### DESCRIPTION OF THE PREFERRED EMBODIMENTS

The following more detailed description of the embodiments of the method is a representative of exemplary embodiments of the technology, wherein similar parts are designated by same numerals throughout.

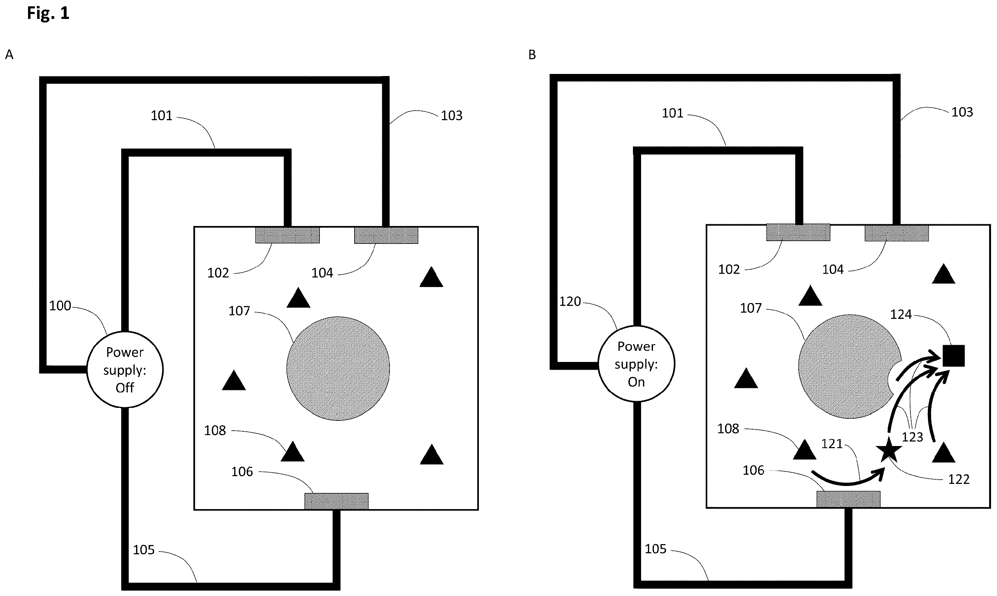

Figure 1 shows a schematic overview of a part of the method according to the invention and an etching chamber used for the method. Within a chamber three electrodes, a counter electrode 102, a working electrode 106 and a reference electrode 104, are arranged. The setup comprises further a power supply 100 and conductors to the electrodes (101, 103, 105). A solution containing I⁻ is filled in the chamber and has contact to the electrodes and at least one gold particle (107). As long as the power supply is off, no etching occurs. Activation of the power supply (Fig. 1 B) leads to the local generation of I³⁻ from I⁻ (108; or analogous reactions using other halide molecules) and to the efficient etching of the gold particle. In a first reaction 121 elemental Iodine 122 is formed and in a second reaction 123 this elemental iodine reacts with the gold particle, resulting: AuI₂ 124. The counter and reference electrodes may be two separate electrodes or fused to one electrode.

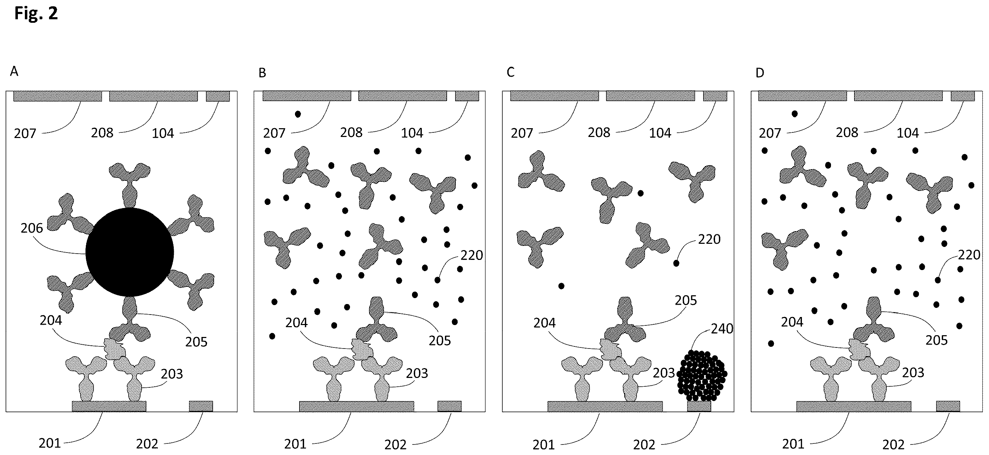

Figure 2 shows a schematic overview of a method according to the present invention suitable for detection of an analyte and an assay chamber for the detection and quantification of analytes. In Figure 2 A) the assay for the binding of the analyte molecule 204 is completed. The analyte 204 has been bound to the receptor molecule 203 (e.g. capture IgG) and the gold particle 206 has been conjugated to a secondary receptor molecule 205 (e.g. reporter IgG). During the binding assay the secondary receptor molecule 205 as bound to the analyte 204. In Figure 2 B), the etching reaction is initiated leading to the dissolution of the gold particle 206 into gold ions 220. The etching reaction is carried out when an electrochemical potential is applied using the dissolution electrode 201 and counter electrode 207. The application of a plating potential to the detection electrode 202 (counter electrode 208) leads to the plating of the gold ions on the detection electrode 202 (electro plated gold ions 240). The electrochemical dissolution of the plated gold particles 240 generates an electric current proportional to the amount of plated gold and thus proportional to the amount of analyte molecules 204 present in the sample.

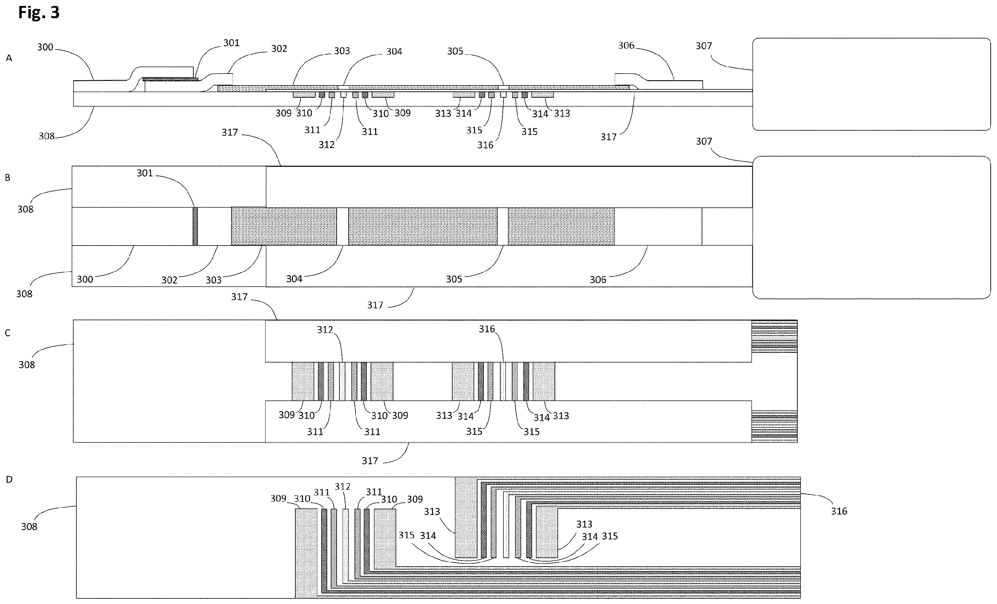

Figure 3 shows a schematic overview (side view and top view) of a device suitable to perform a method according to the present invention arranged as lateral flow assay suitable for the detection of molecules in liquid samples. Figure 3 A) shows a side view. The sample is deposited on the sample pad 300 and wicks through the pads and filter membrane 303 towards the collection pad 306 and the read-out device 307. The electrodes and the sample carrier strip are separated by an insulator 317.

Figure 3 B) shows a top view of an exemplary lateral flow assay. The substrate bottom 308 supports a sample pad 300, and a conjugation pad 302, separated by a filter membrane 301. A sample carrier strip 303 comprises a detection area 304 and a control area 305. At the end a collection pad is arranged.

Figure 3 C) shows a top view without the pads and the membrane revealing the underlying structures. Here one can see the arrangement of the electrodes, which are present twice, one set for the sample detection, one set for the control stripe. The test counter electrode 309 is located next to a test reference electrode 310 and followed by the test working electrode 311 (dissolution electrode). Next to it the test working electrode 312 (detection electrode) is located. The set for the control contains control counter electrode 313, control reference electrode 314, control working electrode (dissolution electrode) 315 and control working electrode (detection electrode) 316. Figure 3 D) shows another top view without the pads, membranes and insulating layers revealing the underlying structures.

Figure shows a schematic overview (side view) of alternative devices suitable to perform a method according to the present invention arranged as lateral flow assay and being an alternative design of the device shown in Figure 3. One difference is a substrate top 400 containing the test working electrode 312 (detection electrode).

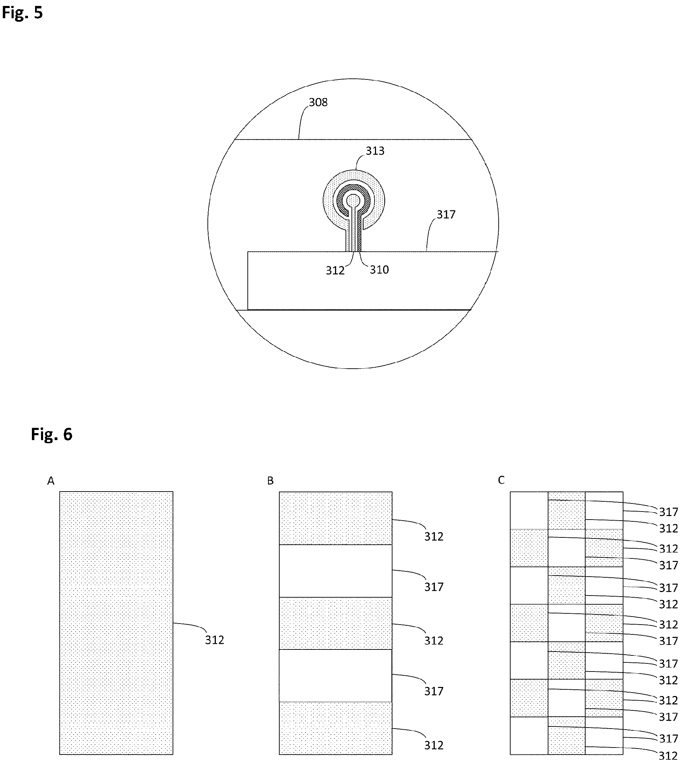

Figure 5 shows an alternative electrode design, wherein a control counter electrode 313 and a test reference electrode 310 are arranged concentric around the test working electrode 312 (detection electrode).

Figure 6 alternative designs for the detection electrode. The detection electrode 312 may be one area or may be separated to several areas by insulators 317.

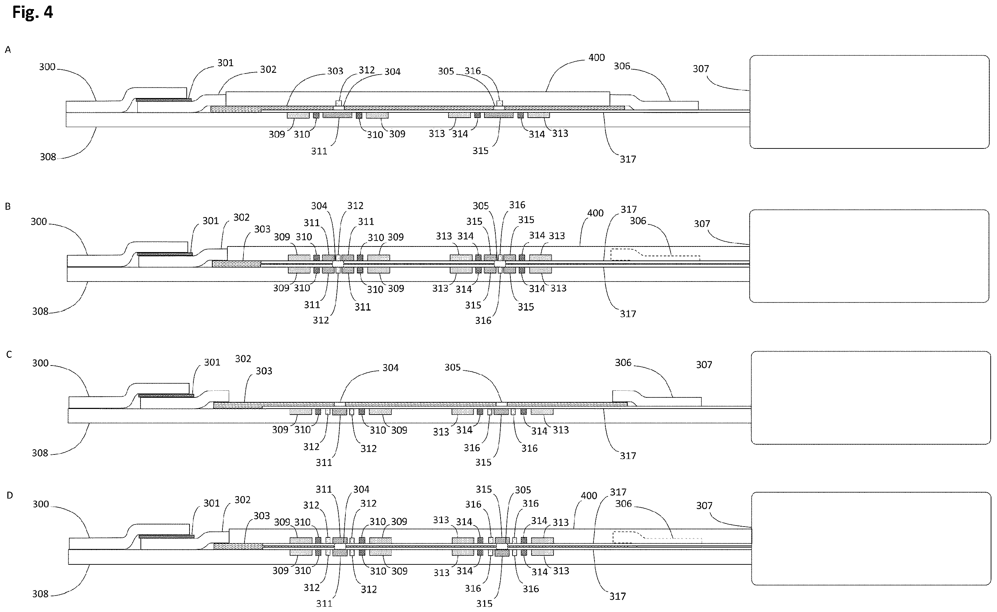

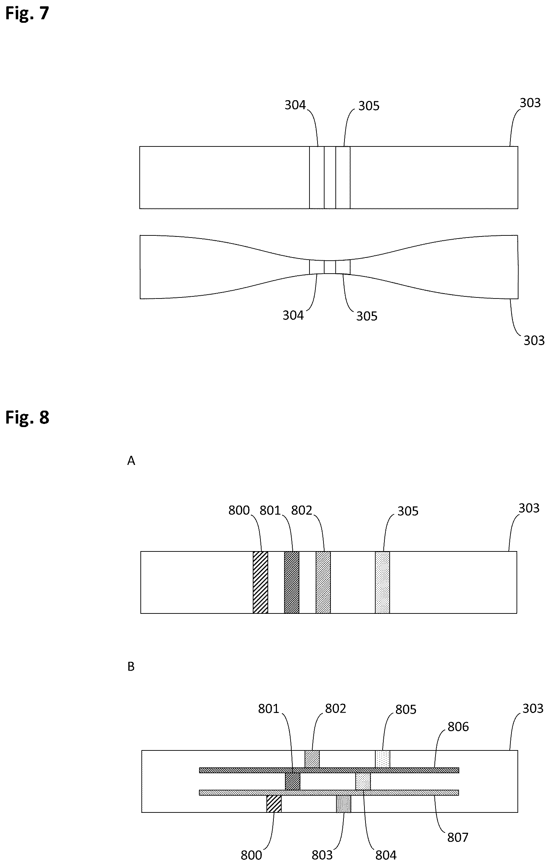

Figure 7 shows a top view of alternative designs for the membrane shape of the device shown in Figure 3 or 4. The thickness of the membrane may decrease to the middle where the detection area 304 and the control area 305 are located (concentration of the analyte solution).

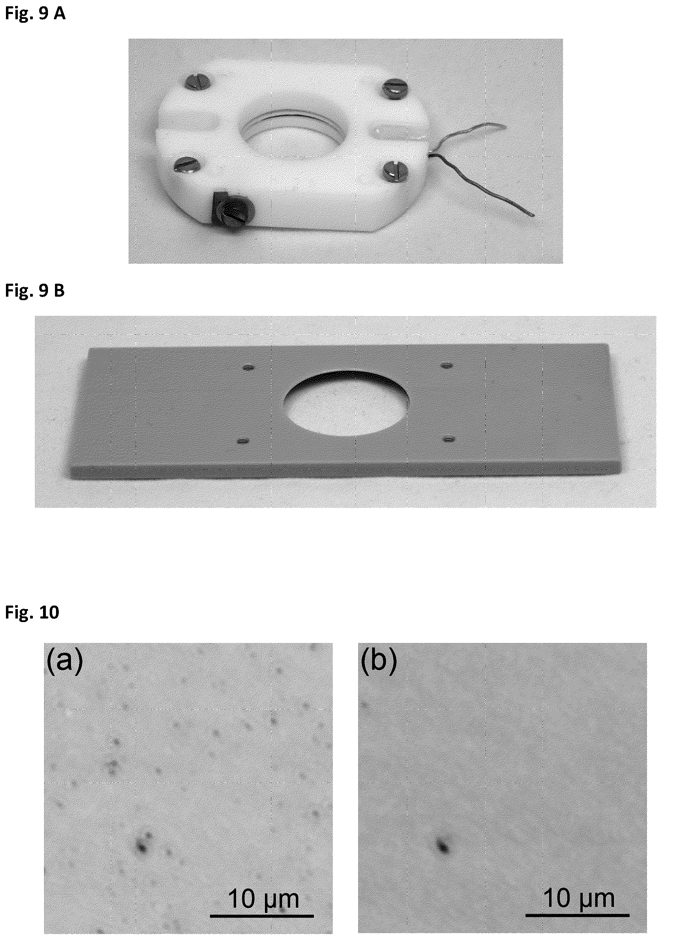

Figure 8 shows an exemplary design of an assay suitable comprising multiple detection areas configuring for a different target concentration range for an increased overall dynamic range or for an improved quantification accuracy or for multiplexed quantification of different molecules. Different detection areas (800, 801, 802) can be located on the sample carrier strip 303 one after the other and being followed by one control area 305, as shown in Figure 8A. Alternatively, the sample carrier strip 303 may be separated by multi-channel barriers 806, 807 into different channels (e.g. located in parallel) wherein each channel contains one each detection area (800, 801, 802) and one control area (803, 804, 805). It is preferred that the individual detection areas (800, 801, 802) and control areas (803, 804, 805) show a staggered arrangement. Figure 9 A shows a setup used for proof of concept experiments. Indium tin oxide coated microscopy slides (shown in Fig. 9B) were coated with bovine serum albumin and subsequently coated with gold nanoparticle (40 nm). The slides were further mounted in a flow cell providing an open well that allows in situ imaging using dark field microscopy).

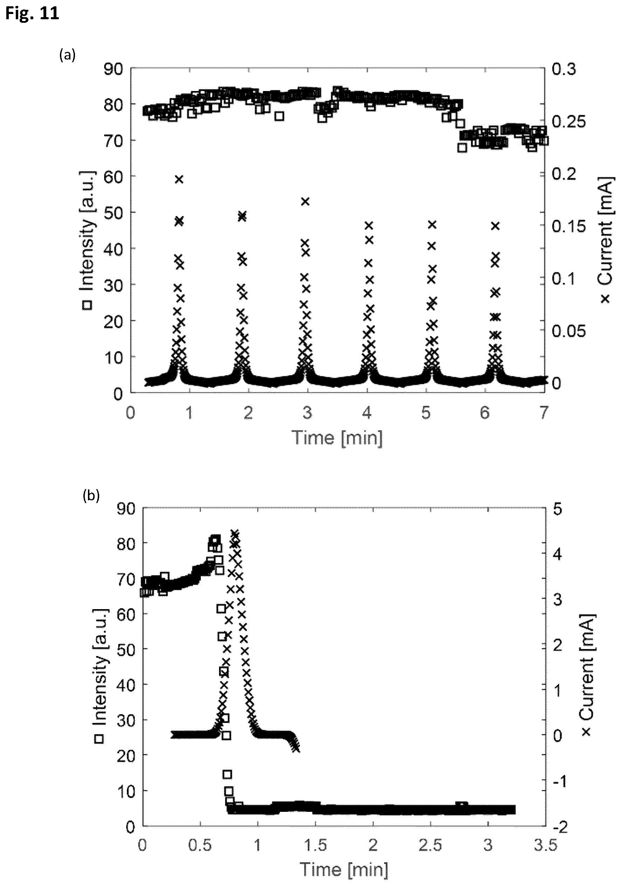

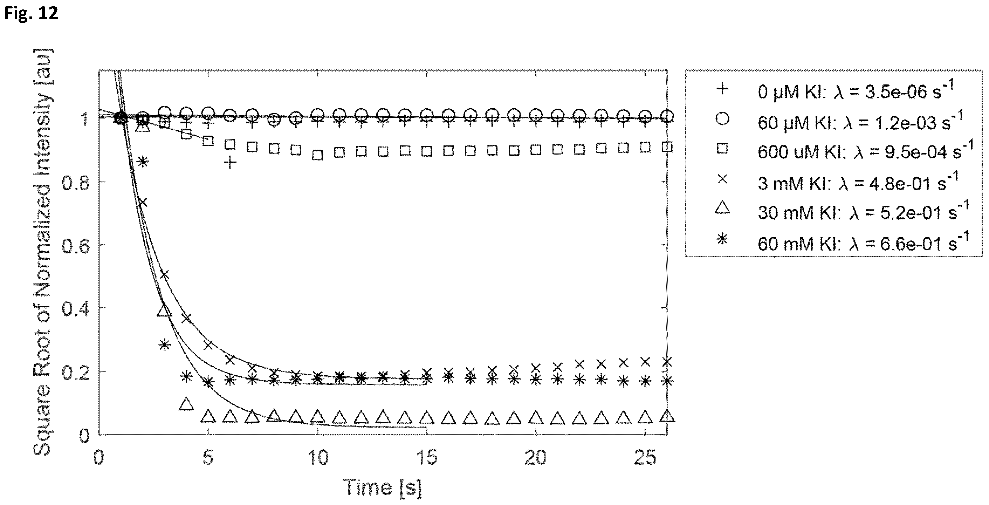

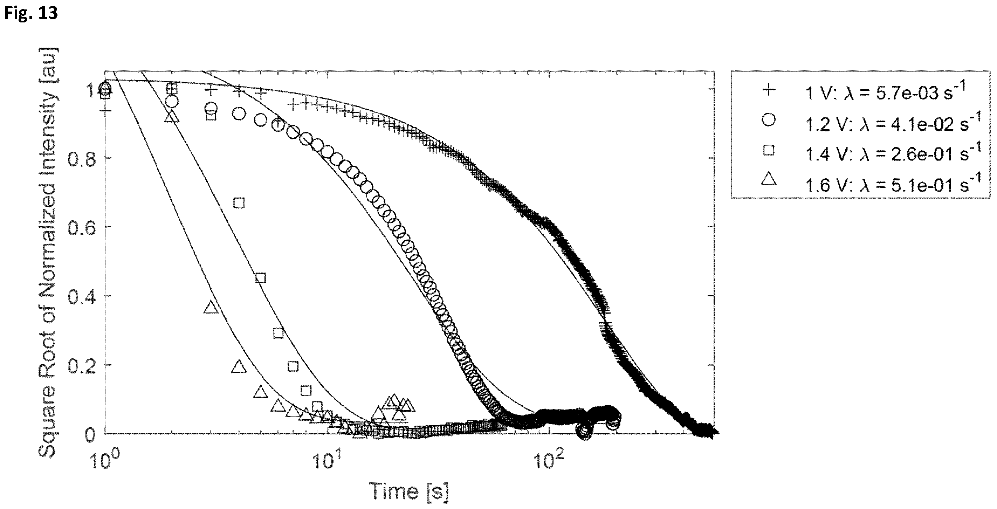

After addition of a 150 mM NaCl solution, the gold nanoparticles show a constant intensity while applying 6 cycles of cyclic voltammetry from -0.2 to 1.4 V (see Figure 10 (a) and Figure 11 (a)). After adding a 3 mM solution of KI in 150 mM NaCl, the Au-nanoparticles remain unchanged before an electrochemical potential is applied, but they are etched very quickly while the applied potential reaches 1.2 V as illustrated in Figure 10 (b) and Figure 11 (b). The same setup (Figure 9) was used to measure the dissolution kinetics depending on the used amount of potassium iodide in Figure 12, and on the applied overpotential in Figure 13.

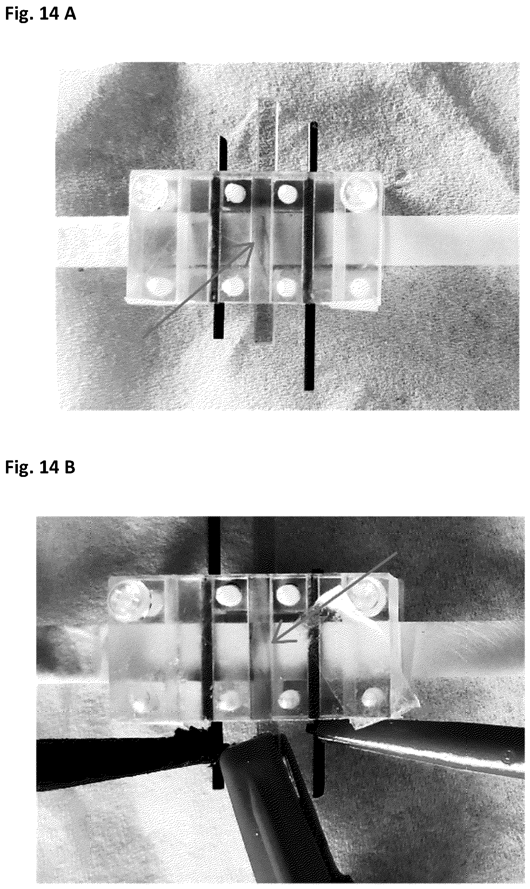

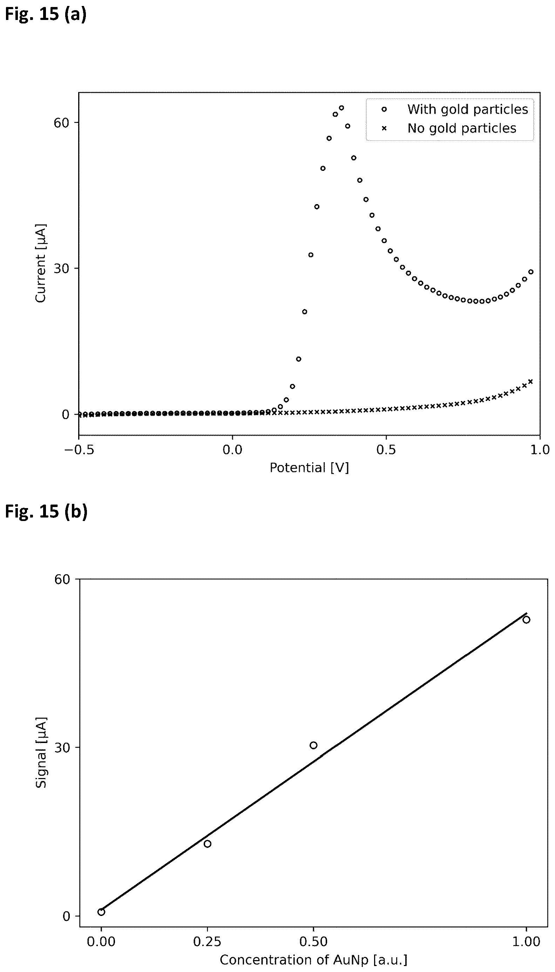

Figure 14 shows another setup used for a proof of concept experiment, namely a proof-of-concept embodiment of an electrochemical lateral flow assay with a three electrodes setup and a lateral flow assay strip. A line of adsorbed gold nanoparticles was added to said strip and is shown in Figure 14 A. The same setup after the electrochemical dissolution of the gold nanoparticles is illustrated in Figure 14 B. The gold nanoparticles were functionalized with biotin and the detection/quantification line is functionalized with streptavidin, which specifically binds the biotin on the gold nanoparticles. The corresponding readout current using cyclic voltammetry of the test strip described above is shown in Figure 15 (a), after the dissolution of the gold nanoparticles (circles) and a control experiment without gold nanoparticles (crosses). Figure 15 (b) shows the linear response of the peak currents of a dilution series of the gold nanoparticles.

## Claims

1. A method for the detection of gold nanoparticles conjugated to a biomolecule comprising the following steps:
∘ providing an electrochemical device having at least one indium tin oxide electrode and a solution comprising iodide,
∘ providing a sample suspected of comprising gold nanoparticles conjugated to a biomolecule
∘ applying an electrochemical potential to the solution to oxidise iodide to iodine suitable for degrading the gold nanoparticles conjugated to a biomolecule,
∘ mixing the solution and the sample suspected of comprising gold nanoparticles conjugated to a biomolecule,
∘ degradation of gold nanoparticles conjugated to a biomolecule by etching with iodine,
∘ quantifying the amount of degraded gold with anodic stripping voltammetry on an indium tin oxide working electrode, wherein
the solution containing iodide is not degrading the gold nanoparticles prior to conversion of iodide to iodine and triiodide.

2. The method according to claim 1, wherein a first pair of electrodes is used for detection of the dissolved gold and a second pair of electrodes is used for application of an electrochemical potential for the electrochemical generation of the solution containing iodine and triiodide that degrades the gold nanoparticles.

3. The method according to claim 1 or 2, wherein the biomolecule is a protein, a polypeptide, an oligopeptide, an aptamer, a polynucleotide, a polycarbohydrate, or a lipid and bind a specific analyte.

4. A system for a bioassay comprising quantification or detection of a specific analyte comprising
a kit for the electrochemically controlled degradation of gold nanoparticles, and an electronic device for applying and controlling a potential or current and for determination of an electric current or potential containing at least two electrodes, including a working electrode made of indium tin oxide,
wherein the kit comprises an inactive precursor being iodide, and gold nanoparticles conjugated to a biomolecule for recognizing and binding the specific analyte the device being configured for converting the inactive precursor being iodide to an active substance being iodine or triiodide being able to degrade or etch the colloidal gold particles and for quantification or detection the amount of degraded gold with anodic stripping voltammetry on the indium tin oxide working electrode, wherein the degradation and quantification are performed in presence of iodide converted electrochemically from the iodine.

## Patentansprüche

1. Ein Verfahren zum Nachweis von Goldnanopartikeln, die an ein Biomolekül konjugiert sind, umfassend die folgenden Schritte:
∘ Bereitstellen einer elektrochemischen Vorrichtung mit mindestens einer Indium-Zinn-Oxid-Elektrode und einer Lösung, die Iodid enthält,
∘ Bereitstellen einer Probe, bei der der Verdacht besteht, dass sie Goldnanopartikel enthält, die an ein Biomolekül konjugiert sind,
∘ Anlegen eines elektrochemischen Potentials an die Lösung, um Iodid zu Iod zu oxidieren, das zum Abbau der an ein Biomolekül konjugierten Goldnanopartikel geeignet ist,
∘ Mischen der Lösung und der Probe, bei der der Verdacht besteht, dass sie an ein Biomolekül konjugierte Goldnanopartikel enthält,
∘ Abbau der an ein Biomolekül konjugierten Goldnanopartikel durch Ätzen mit Iod,
∘ Quantifizierung der Menge an abgebautem Gold mittels anodischer Stripping-Voltammetrie an einer Indium-Zinn-Oxid-Arbeitselektrode, wobei
die Iodid enthaltende Lösung die Goldnanopartikel vor der Umwandlung von Iodid in Iod und Triiodid nicht abbaut.

2. Das Verfahren nach Anspruch 1, wobei ein erstes Elektrodenpaar zum Nachweis des gelösten Goldes und ein zweites Elektrodenpaar zum Anlegen eines elektrochemischen Potentials für die elektrochemische Erzeugung der Iod und Triiodid enthaltenden Lösung verwendet wird, die die Goldnanopartikel abbaut.

3. Das Verfahren nach Anspruch 1 oder 2, wobei das Biomolekül ein Protein, ein Polypeptid, ein Oligopeptid, ein Aptamer, ein Polynukleotid, ein Polykohlenhydrat oder ein Lipid ist und einen spezifischen Analyten bindet.

4. Ein System für einen Bioassay, umfassend die Quantifizierung oder den Nachweis eines spezifischen Analyten, umfassend:
einen Kit für den elektrochemisch gesteuerten Abbau von Goldnanopartikeln, und
eine elektronische Vorrichtung mit mindestens zwei Elektroden, einschließlich einer Arbeitselektrode aus Indium-Zinn-Oxid,
wobei der Kit einen inaktiven Vorläufer, bei dem es sich um Iodid handelt, und an ein Biomolekül konjugierte Goldnanopartikel zum Erkennen und Binden des spezifischen Analyten umfasst,
wobei die Vorrichtung so konfiguriert ist, dass sie den inaktiven Vorläufer, bei dem es sich um Iodid handelt, in eine aktive Substanz umwandelt, bei der es sich um Iod oder Triiodid handelt, die in der Lage ist, die kolloidalen Goldpartikel abzubauen oder zu ätzen, und dass sie die Menge an abgebautem Gold mittels anodischer Stripping-Voltammetrie an der Indium-Zinn-Oxid-Arbeitselektrode quantifiziert oder nachweist, wobei der Abbau und die Quantifizierung in Gegenwart von Iodid durchgeführt werden, das elektrochemisch aus dem Iod umgewandelt wurde.

## Revendications

1. Procédé de détection de nanoparticules d'or conjuguées à une biomolécule, comprenant les étapes suivantes :
∘ la fourniture d'un dispositif électrochimique comportant au moins une électrode en oxyde d'indium-étain et une solution comprenant de l'iodure,
∘ la fourniture d'un échantillon suspecté de comprendre des nanoparticules d'or conjuguées à une biomolécule,
∘ l'application d'un potentiel électrochimique à la solution pour oxyder l'iodure en iode approprié pour dégrader les nanoparticules d'or conjuguées à une biomolécule,
∘ le mélange de la solution et de l'échantillon suspecté de comprendre des nanoparticules d'or conjuguées à une biomolécule,
∘ la dégradation des nanoparticules d'or conjuguées à une biomolécule par attaque chimique avec de l'iode,
∘ la quantification de la quantité d'or dégradé par voltamétrie de redissolution anodique sur une électrode de travail en oxyde d'indium-étain, la solution contenant de l'iodure ne dégradant pas les nanoparticules d'or avant la conversion de l'iodure en iode et en triiodide.

2. Procédé selon la revendication 1, dans lequel une première paire d'électrodes est utilisée pour la détection de l'or dissous et une seconde paire d'électrodes est utilisée pour l'application d'un potentiel électrochimique pour la génération électrochimique de la solution contenant de l'iode et du triiodide qui dégrade les nanoparticules d'or.

3. Procédé selon la revendication 1 ou 2, dans lequel la biomolécule est une protéine, un polypeptide, un oligopeptide, un aptamère, un polynucléotide, un polyhydrate de carbone ou un lipide et se lie à un analyte spécifique.

4. Système pour un bioassay comprenant la quantification ou la détection d'un analyte spécifique, comprenant :
un kit pour la dégradation commandée électrochimiquement de nanoparticules d'or, et
un dispositif électronique contenant au moins deux électrodes, incluant une électrode de travail constituée d'oxyde d'indium-étain,
dans lequel le kit comprend un précurseur inactif qui est l'iodure, et des nanoparticules d'or conjuguées à une biomolécule pour reconnaître et lier l'analyte spécifique,
le dispositif étant configuré pour convertir le précurseur inactif qui est l'iodure en une substance active qui est l'iode ou le triiodide capable de dégrader ou d'attaquer les particules d'or colloïdal et pour quantifier ou détecter la quantité d'or dégradé par voltamétrie de redissolution anodique sur l'électrode de travail en oxyde d'indium-étain, la dégradation et la quantification étant effectuées en présence d'iodure converti électrochimiquement à partir de l'iode.
